# EUROPEAN PATENT SPECIFICATION

(11) **EP 1 630 892 B1**
(45) Date of publication and mention of the grant of the patent: **12.09.2012**
(21) Application number: 05254658.7
(22) Date of filing: 27.07.2005
(51) Int. Cl.: H01M 8/02, H01M 8/10

(54) **Separator and cell using the same for use in solid polymer electrolyte fuel cell**
Separator sowie damit versehene Festpolymerelektrolyt-Brennstoffzelle
Séparateur et pile à combustible à électrolyte polimérique solide l'utilisant

(30) Priority: 29.07.2004 JP 2004221614
(43) Date of publication of application: 01.03.2006
(73) Proprietor: TOKAI RUBBER INDUSTRIES, LTD., Komaki-shi, Aichi, 485-8550 (JP)
(72) Inventor: Ishioka, Yutaka, Komaki-shi, Aichi 485-8550 (JP); Mihara, Yasuhiko, Komaki-shi, Aichi 485-8550 (JP); Hirai, Ryo, Komaki-shi, Aichi 485-8550 (JP)
(74) Representative: Roberts, Mark Peter

(56) References cited:
- EP-A- 1 255 315
- CA-A1- 2 496 339
- US-A1- 2002 192 532
- US-A1- 2004 048 135

## Description

### BACKGROUND OF THE INVENTION

### 1. Field of the Invention

The present invention relates in general to a cell for use in a solid polymer electrolyte fuel cell that employs a solid polymer electrolyte membrane, and more particular to a cell for a solid polymer electrolyte fuel cell of novel construction that affords a high level of gas flow path sealing functionality within the cell by means of a simple construction.

### 2. Description of the Related Art

As is well known, solid polymer electrolyte fuel cells are able to produce electrical power by means of an electrochemical reaction when supplied with oxygen (air) as an oxidant and hydrogen as a fuel, these being supplied onto the surfaces of a pair of catalyst electrodes superposed against either face of an electrolyte which is a solid polymer electrolyte membrane, such as a solid ion exchange membrane or the like.

In solid polymer electrolyte fuel batteries, it is important that there be consistent supply of oxygen and hydrogen onto the surfaces of the catalyst electrodes in order to consistently and efficient produce the intended voltage. It is also important for the appropriate temperature to be maintained.

Accordingly, there is typically employed a cell of a structure wherein a membrane/electrode assembly (MEA) composed of a breathable porous membrane oxidant electrode and a fuel electrode disposed on either side of the solid polymer electrolyte membrane is assembled with a first separator superposed against the oxidant electrode face thereof and a second separator superposed against the fuel electrode face thereof. A plurality of such unit cells are stacked and electrically connected directly to produce the desired voltage.

An oxidant gas flow passage is formed by means of covering with the oxidant electrode a recess disposed on the first separator, and fuel gas flow passage is formed by means of covering with the fuel electrode a recess disposed on the second separator. A coolant flow passage is formed by a recess disposed in a secondary face of the first separator or second separator on the back side from a primary face which is superposed against the electrode, by covering the recess with the secondary face of another adjacent cell.

At respective peripheral edges of stacked unit cells, there are formed perforating therethrough in the stacking direction an oxidant gas inlet and an oxidant gas outlet, a fuel gas inlet and a fuel gas outlet, and a coolant inlet and a coolant outlet. Oxidant gas, fuel gas, and coolant supplied through these inlets and outlets are circulated the aforementioned oxidant gas flow passages, fuel gas flow passages, and coolant flow passages of the unit cells, and are discharged from the outlets.

Here, the pattern of the oxidant gas flow passage, the fuel gas flow passage , and the coolant flow passage is thought to have an important effect on the efficiency and stability of power generation, and various flow passage patterns have been proposed to date.

Incidentally, in a unit cell of conventional construction, the first separator and the second separator juxtaposed against either side of the membrane/electrode assembly (MEA) differ in construction from one another, as taught in JP-A-2002-83610, for example. Specifically, the first separator and the second separator have formed on their respective primary faces recesses for forming particular gas flow passages of specific pattern, with a recess for the purpose of forming a coolant flow passage being formed on the secondary face of either the first separator or the second separator.

Thus, regardless of whether the first separator and the second separator were fabricated of synthetic resin material, carbon material, or metal material, it was necessary to separately prepare forming molds of metal or the like for the purpose of manufacturing them. Additionally, once manufactured, the first separators and second separators require separate physical quantity management for production and supply, so that appreciable labor is required for management. Further, at the fuel cell cell production stage as well, the first separators and the second separators must be handled while differentiating between them, and must each be juxtaposed to a particular side of the MEA. Accordingly, a laborious production process and higher costs were problems.

In unit cells of conventional construction, a separate seal rubber is interposed between members that are superposed on one another. However, where recesses for use as gas passages are formed on the primary faces of the first separator and the second separator as described above, in portions connecting the recesses to gas supply flow passages and discharge flow passages perforating the outer peripheral edge portions of the first separator or second separator, clamping force on the seal rubber tends to be insufficient, posing the risk of diminished sealing. To address this problem, the above described patent document teaches a construction in which passages in portions connecting the recesses to gas supply flow passages and discharge flow passages are formed on the secondary face of the first separator or second separator. With this connecting construction, however, the structures of the first separator and second separator become quite complicated, difficult to manufacture, and difficult to hold down costs.

### SUMMARY OF THE INVENTION

It is therefore one object of the present invention to provide a solid polymer electrolyte fuel cell separator of novel construction, whereby it is possible to easily manufacture, with a small number of parts, a cell for a solid polymer electrolyte fuel cell having a first separator and a second separator juxtaposed against both the front and back sides of the MEA to form an oxidant gas flow passage and a fuel gas flow passage.

It is another object of the present invention to provide a cell for a solid polymer electrolyte fuel cell of novel construction, which can be manufactured easily at low cost with a small number of parts.

The above and/or optional objects of this invention may be attained according to at least one of the following modes of the invention. The following modes and/or elements employed in each mode of the invention may be adopted at any possible optional combinations. It is to be understood that the principle of the invention is not limited to these modes; of the invention and combinations of the technical features, but may otherwise be recognized based on the teachings of the present invention disclosed in the entire specification and drawings or that may be recognized by those skilled in the art in the light of the present disclosure in its entirety.

According to the present invention, there is provided a single type metal separator as specified in the claims.

In the solid polymer electrolyte fuel cell separator of construction according to this mode, through-holes are disposed at the upper portions and lower portions of the pair of opposite sides of metal plates, and by means of flipping two such metal plates front to back, the upper through-holes at the first opposing side of one of the metal plates may serve as the upper through-holes at the other opposing side or the lower through-holes of the first opposing side of the other metal plate, while the lower through-holes at the other opposing side of the first metal plate may serve as the lower through-holes at a first opposing side or the upper through-holes at the other opposing side of the other metal plate. As a result, the recesses formed interconnecting the upper through-hole at the first opposing side with the lower through-hole of the other opposing side of one of the metal plates interconnect the lower through-holes at the first opposing side with the upper through-hole at the other opposing side of the other metal plate, i.e. a metal plate flipped front to back with respect to the first metal plate. Accordingly, using identical metal separators and juxtaposing the faces thereof with the recesses formed thereon against the oxidant electrode side and the fuel electrode side of the MEA (membrane/electrode assembly), there is formed on the surface of the oxidant electrode an oxidant gas flow passage consisting of a recess extending so as to interconnect the oxidant gas inlet hole and outlet hole. On the fuel electrode surface there is formed a fuel gas flow passage consisting of a recess extending so as to interconnect the fuel gas inlet hole and outlet hole. Thus, first separators and second separators can be realized simply by flipping front to back, and it becomes possible to use a common component, to achieve greater efficiency in component manufacture, management, and assembly operations.

By fabricating the first and second separators of metal, greater strength than a separator of carbon or the like can be assured, and the required strength can be assured while making the first and second separators sufficiently thin. Additionally, metal separators have better conductivity than separators of carbon or the like. Thus, it is possible to realize a more compact, high performance fuel cell, while ensuring adequate strength.

Additionally, where fabricated by pressing of metal, high productivity can be achieved at a very high level of dimensional accuracy.

Further, since metal separators have much higher heat resistance temperatures than resins or carbon, problems such as leat-induced deformation or shrinkage are avoided.

Additionally, metal is easy to reuse, by means of recycling or the like,
Furthermore, in the solid polymer electrolyte fuel cell separator of construction according to this embodiment, two metal separators are superposed at their secondary faces, in abutment and in electrical continuity with one another at the bottoms of the recesses; and between the superposed secondary faces of the metal separators, the coolant flow passage is formed traversing between the center holes disposed in the center portions of the opposing sides. Accordingly, electrical continuity can be assured through skillful use of the bottoms of the recesses at the juxtaposed secondary faces of the metal separators and the space between the secondary faces can be utilized effectively to form the coolant flow passage.

Furthermore, in the solid polymer electrolyte fuel cell separator of construction according to this embodiment, where the adjacent metal separators are superposed, the unnecessary gap between the secondary faces of the two metal separators can be filled up, or used to form the coolant recess. Thus, a high degree of freedom in designing the coolant flow passage can be assured. Additionally, the secondary face seal rubber layer as formed in an area on the secondary face side of the metal separator, excluding the electrical continuity portion. Specifically, it is formed for the purpose of, for example, sealing from the outside the juxtaposed portions of the outer peripheral edges of the separators, or sealing in an annular configuration the outer peripheral portion of the area where the MEA is situated. By so doing, a fewer number of parts is needed that if the seal rubber were constituted as a separate component, the assembly operation is easier, and the occurrence of defects due to error during assembly can be avoided. Additionally, in the present invention, since a metal separator is used as the separator, formation of a covering is easily achieved by means of vulcanization bonding of rubber or the like.

Optionally, between the secondary faces of the the metal separators superposed against one another at their secondary faces, there may be formed a coolant flow passage utilizing an area of passage form that appears between the plurality of recesses extending substantially parallel next to one another.

In the solid polymer electrolyte fuel cell separator of construction according to this mode, through skillful use of an area on the passage that appears between recesses, it is possible to form a coolant flow passage between the stacked secondary faces of the two metal separators, without the need for special components to form the coolant flow passage. It is therefore possible to reduce the number of parts, and through skillful use of the space between the secondary faces of the two metal separators, to achieve a more compact solid polymer electrolyte primary fuel cell separator.

Optionally, a primary face seal rubber layer may be formed adhering to the primary face onto which the recesses open in the metal separator, with a perimeter of the recess formation zone being surrounded by the primary face seal rubber layer, and wherein in the connecting regions of the ends of the recesses with the upper and lower through-holes, the primary face seal rubber layer is formed so as to extend continuously in the recess width direction, traversing the open portion of the connecting regions of the recesses.

In the solid polymer electrolyte fuel cell separator of construction according to this embodiment, sealing ability by the seal rubber layer can be advantageously assured even in the recess formation regions, without a separate plate member to cover the recess, for example. Additionally, the seal rubber layer is affixed to the metal separator, preferably through vulcanization bonding to the primary face of the metal separator. Accordingly, the problem of leaking due to gas infiltrating the gap between the seal rubber layer and the metal separator can be prevented. Also, the seal rubber layer traversing the open portion of the recess adheres: to the metal separator at both sides of the recess, whereby compressive force during sealing is advantageously assured not only by simple elasticity in the shear direction, but also by elasticity in the tensile direction.

According to the present invention, there is also provided a cell for a solid polymer electrolyte fuel cell, and provides a cell for a solid polymer electrolyte fuel cell as specified in the claims.

In the cell for the solid polymer electrolyte fuel cell of construction according to this embodiment, since manufacture is possible with a smaller number of parts, efficiency improvements may be realized in component manufacture, management, and assembly. Additionally, by using metal separators, high levels of rigidity and electrical performance can be achieved with compact size, as compared to a solid polymer electrolyte fuel cell that uses separators of conductive resin or the like.

As will be understood from the preceding description, the metal separator constructed in accordance with the present invention can be employed as the separator for juxtaposition to either the oxygen side electrode or the fuel side electrode of the MEA. Accordingly, a single mold suffices to manufacture the separator forming the oxygen flow passage and the separator forming the fuel flow passage. Additionally, management of separator stacking quantity, management of quantities in transit, and management of quantities at the assembly plant may be simplified appreciably. Further, when juxtaposing them against an MEA to produce a cell, the labor entailed in assembling the separators can be reduced, and occurrence of defects due to error in separator assembly can effectively reduced.

For the reasons cited above, with the unit cell for the solid polymer electrolyte fuel cell of construction according to the present invention, it is possible significantly reduce the labor entailed in manufacture, as well as reducing the occurrence of defects.

### BRIEF DESCRIPTION OF THE DRAWINGS

The foregoing and/or other objects features and advantages of the invention will become more apparent from the following description of a preferred embodiment with reference to the accompanying drawings in which like reference numerals designate like elements and wherein:
FIG. 1 is a perspective view of a solid polymer electrolyte fuel cell composed of separators of construction according to a first embodiment of the present invention;
FIG. 2 is an exploded perspective view showing a construction of a unit cell of the solid polymer electrolyte fuel cell of FIG. 1;
FIG. 3 is a side elevational view showing a primary face of a separator of the solid polymer electrolyte fuel cell of FIG. 1;
FIG. 4 is a side elevational view of the primary face of the separator provided of FIG. 3 with a seal rubber layer adhered thereto;
FIG. 5 is a side elevational view of a secondary face of the separator of FIG. 3;
FIG. 6 is a side elevational view of the secondary face of the separator of FIG. 5 provided with a seal rubber layer adhered thereto;
FIG. 7 is a cross sectional view showing unit sells being superposed on one another to form the solid polymer electrolyte fuel cell of FIG. 1;
FIG. 8 is a fragmentary enlarged view of the separator of FIG. 4;
FIG. 9 is an enlarged part cross sectional perspective view showing the secondary face sides of the separators of FIGS. 4 and 6 being superposed together on each other; and
FIG. 10 is a cross sectional view of unit cells each including a separator according to a second embodiment of the invention, where the unit cells are superposed together.

### DETAILED DESCRIPTION OF PREFERRED EMBODIMENTS

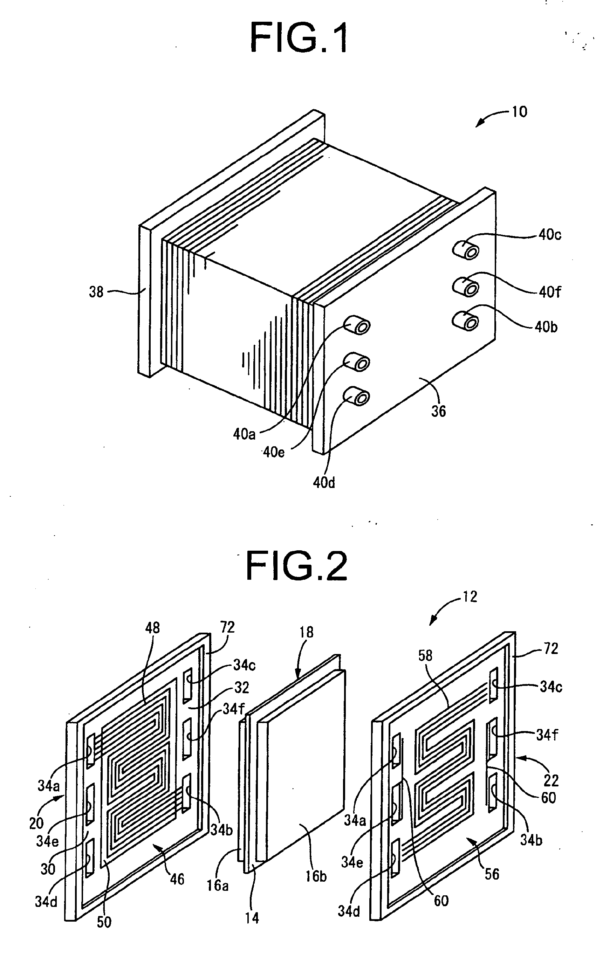

A simplified perspective view of a solid polymer electrolyte fuel cell (PEFC) 10 composed of a stack of multiple unit cells 12 constructed according to the invention is depicted in FIG. 1. The solid polymer electrolyte fuel cell 10 depicted in FIG. 1 is arranged with the vertical and sideways directions in the illustrated state aligned with the plumb-bob vertical and horizontal directions. In the description hereinabove, as a general rule, the vertical and sideways directions, and plumb-bob vertical and horizontal directions, refer to those in the state illustration in FIG. 1.

More specifically, as shown in FIG. 2, the unit cells 12 making up the solid polymer electrolyte fuel cell 10 comprise a membrane/electrode assembly (MEA) 18 having as the electrolyte a solid polymer membrane 14 as a solid polymer electrolyte membrane such as a solid ion exchange membrane with a fuel electrode 16a and an oxidant electrode 16b as a pair of catalyst electrodes superposed to either side thereof and joined and unified therewith. A first separator 20 and a second separator 22 are superposed to either side of this membrane/electrode assembly 18 in a sandwich configuration. By stacking a plurality of unit cells 12 in the thickness direction, there is composed a cell stack that constitutes the main body of the solid polymer electrolyte fuel cell 10.

According to the known art, the fuel electrode 16a and an oxidant electrode 16b contain a platinum catalyst, and are formed, for example, from carbon or other conductive material, with a porous structure so as to permit gas to pass through. However, inclusive of the material of the solid polymer membrane 14, the material and microzone structure of the membrane/electrode assembly (MEA) 18 composed including the fuel electrode 16a and an oxidant electrode 16b are not characteristic features of the invention, but may be produced through application of known art technology, and as such will not be described in detail.

In each unit cell 12, a fuel gas flow passage 23 for supplying fuel (hydrogen) is formed at the superposed faces of the membrane/electrode assembly 18 and the first separator 20. An oxidant gas flow passage 26 for supplying air (oxygen) is formed at the opposed faces of the membrane/electrode assembly 18 and the second separator 22. Between two adjacent unit cells 12 which by being stacked together make up the cell stack, at the opposed faces of the first separator 20 of one unit cell 12 and the second separator 22 of the other unit cell 12, is formed a coolant flow passage 28 for circulating coolant.

Additionally, in each unit cell 12, a fuel gas inlet 34a, a fuel gas outlet 34b, an oxidant gas inlet 34c, and an oxidant gas outlet 34d are situated at the tops and bottoms of a first side edge 30 and a second side edge 32 located in opposition in the horizontal direction when installed in the solid polymer electrolyte fuel cell 10, each of these apertures being formed perforating in the stacking direction. In particular, the fuel gas inlet 34a and the fuel gas outlet 34b are formed at generally opposing locations along one diagonal, and the oxidant gas inlet 34c and the oxidant gas outlet 34d are formed at generally opposing locations along the other diagonal.

In the approximately center portion of the first side edge 30 and the second side edge 32 in each unit cell 12 are respectively formed, at opposing locations in the horizontal direction, a coolant inlet 34e and a coolant outlet 34f that pass through in the stacking direction.

In each unit cell 12, the membrane/electrode assembly 18 is of rectangular plate shape slightly smaller than the first and second separators 20, 22.

By so doing, the fuel gas, oxidant gas, and coolant inlets and outlets 34a -34f are formed as through-holes at corresponding locations in the first and second separators 20, 22, at locations away from an outer peripheral side of the membrane/electrode assembly 18. In the solid polymer electrolyte fuel cell 10, the plurality of stacked unit cells 12 communicate with one another, with the fuel gas, oxidant gas, and coolant inlets and outlets 34a-34f formed with an overall configuration passing in the stacking direction through the cell stack that makes up the main body of the solid polymer electrolyte fuel cell 10.

While not explicitly shown in the drawings, as taught for example in JP-A-2002-83610, of the plurality of stacked unit cells 12 in the solid polymer electrolyte fuel cell 10, the first separator 20 of the unit cell 12 situated at a first end in the stacking direction and the second separator 22 of the unit cell 12 situated at the other end in the stacking direction have an anode collector and a cathode collector superposed thereon. The total power of the plurality of directly connected unit cells 12 is drawn out from these collectors. Additionally, against the outside faces of the anode collector and cathode collector are superposed, via appropriate insulating spacers (not shown) an anode retainer plate 36 and a cathode retainer plate 38. Also, while not explicitly shown in the drawings, the plurality of unit cells 12 in their entirety including the collectors and retainer plates of both poles, are fastened together in the stacking direction by means of fastening bolts passed therethrough at the four corners, and integrally secured to form solid polymer electrolyte fuel cell 10.

In the solid polymer electrolyte fuel cell 10, a fuel gas feed port 40a, a fuel gas discharge port 40b, an oxidant gas feed port 40c, an oxidant gas discharge port 40d, a coolant feed port 40e, and a coolant discharge port 40f, for a total of six ports 40a-40f, are formed in the anode retainer plate 36 and cathode retainer plate 38. These ports 40a-40f connect to the corresponding apertures of the fuel gas, oxidant gas, and coolant inlets and outlets 34a-34f formed communicating with one another in the plurality of stacked unit cells 12. External lines (not shown) are connected to the ports 40a-f so that fuel gas, oxidant gas, and coolant can be supplied to and discharged from the fuel gas, oxidant gas, and coolant inlets and outlets 34a-34f.

The fuel gas, oxidant gas, and coolant supplied to the inlets 34a, 34c, 34e through the feed ports 40a, 40c, 40e flows through the fuel gas flow passage 24 and the oxidant gas flow passage formed in an unit cell 12 described previously, and through the coolant flow passage 28 formed between unit cells 12, 12, and then through the outlets 34b, 34d, 34f, to be discharged through the discharge ports 40b, 40d, 40f.

With this arrangement, as in the known art, in the fuel electrode 16a disposed on the first separator 20 side of the solid polymer electrolyte membrane 14, the supplied fuel gas is ionized through catalyst action to supply electrons, while in the oxidant electrode 16b disposed on the second separator 22 side of the solid polymer electrolyte membrane 14, hydrogen ions transported through the solid polymer electrolyte membrane 14 react with oxidant gas (air) supplied from the outside and electrons fed back via an external electrical circuit, to produce water vapor, thereby functioning overall as a battery that exhibits power generating action.

In order to efficient and consistently exhibit the desired power generating action, it is necessary for fuel gas and oxygen gas to be supplied continuously to the catalyst electrodes 16a, 16b of the unit cells 12, and for coolant to be supplied continuously to the unit cells 12 in order to regulate temperature. Accordingly, a description regarding the flow passage construction forming the feed and discharge flow passages for the fuel gas, oxidant gas, and coolant is provided hereinbelow.

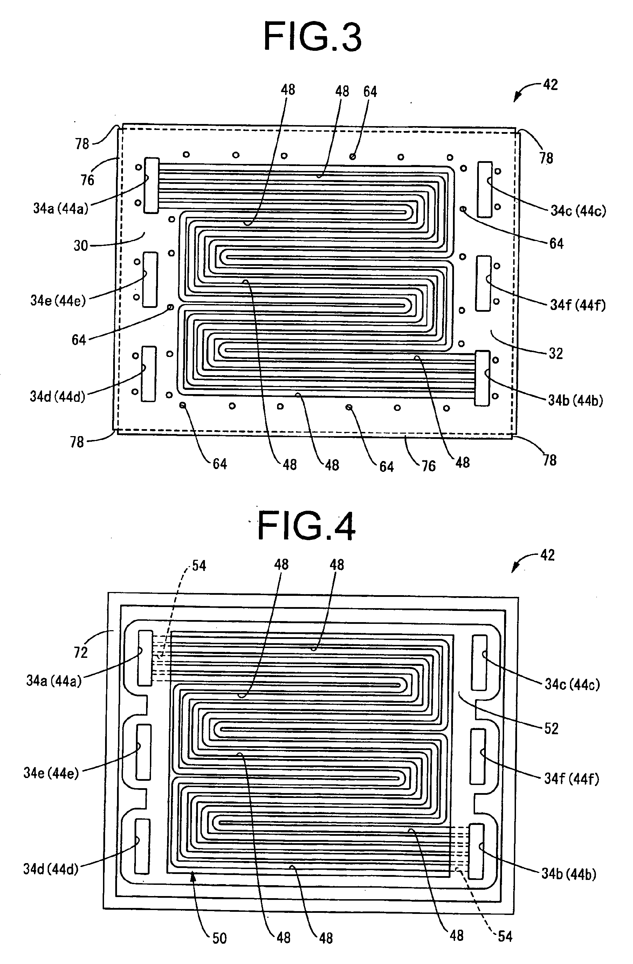

In this embodiment, identical metal separators 42 are employed as the first separator 20 and the second separator 22, as shown in FIGS. 3-6.

In preferred practice the metal separator 42 will be formed of metal material that, in addition to having good conductivity, has effective rigidity and corrosion resistance in oxidizing environments, for example, a stainless steel base material, optionally subjected to a surface treatment or used as a composite material with carbon or the like, to achieve the required characteristics at a high level. In order for the metal separator 42 to have the required rigidity and machining precision, it is formed by means of pressing, using a flat metal plate with generally uniform thickness (e.g. thickness of about 0.1 mm -0.5 mm).

Specifically, in the metal separator 42 are punched equal numbers of through-holes (in this embodiment, three on each side) 44a, 44b, 44c, 44d, 44e, 44f located at the first side edge 30 and the second side edge 32 which are situated on the same side when the unit cell 12 is assembled. The three through-holes 44a, 44e, 44d on the first side edge 30 and the three through-holes 44c, 44f, 44b on the second side edge 32 are formed with mutually symmetrical shape and locations. That is, when the metal separator 42 is inverted front to back about a center axis that is either a horizontal center axis extending on the horizontal through the center in the height direction of the metal separator 42 or a plumb-bob vertical axis extending vertically through the center in the lateral direction, the total of six through-holes 44a-44f will be positioned at the same locations of the side edges on the left and right sides. At the first side edge 30, the through-holes 44a, 44e, 44d are formed in that order from the top, and at the second side edge 32 the through-holes 44c, 44f, 44b are formed in that order from the top.

With this arrangement, even when the two metal separators 42, 42 are superposed inverted front to back, the three through-holes formed in each of the left and right edges will align and communicate with one another in the stacking direction. In this embodiment, the through-holes 44a, 44b, 44c, 44d, 44e, 44f respectively constitute the fuel gas inlet 34a, fuel gas outlet 34b, oxidant gas inlet 34c, oxidant gas outlet 34d, coolant inlet 34e, and coolant outlet 34f.

In the metal separator 42, as shown in FIG. 3 and FIG. 4, on the primary face thereof superposed against the fuel electrode 16a, there is formed a gas flow passage recess 48 that takes a sinuous path first extending in the horizontal direction from the proximity of the fuel gas inlet 34a formed at the upper left of the first side edge 30 and towards the second side edge 32, inflecting vertically downward in proximity to the second side edge 32 and extending slightly downward, making a U-turn and extending in the horizontal direction back towards the first side edge 30, inflecting vertically downward in proximity to the first side edge 30 and extending slightly downward, making another U-turn and again extending in the horizontal direction towards the second side edge 32, until finally reaching the fuel gas outlet 34b formed at the bottom right of the second side edge 32. This recess 48 connects one through-hole 44a to another through-hole 44b situated opposite in the generally diagonal direction; in this embodiment in particular, a plurality of recesses (five in this embodiment) are formed so as to extend parallel to one another. In preferred practice, linear segments of the recess 48 extending in the horizontal direction will be formed situated at generally equidistant intervals in the vertical direction of the primary face 46.

In this embodiment in particular, the recess 48 has a cross section of generally isosceles trapezoidal shape gradually constricting in width towards the bottom. In preferred practice, the recess 48 will have width of from 1.0 mm to 2.0 mm at the mouth, and from 0.5 mm to 1.5 mm at the bottom, and depth of from 0.3 mm to 1.2 mm. More preferably, it will have width of 1.6 mm at the mouth, width of 1.0 mm at the bottom, and depth of 0.7 mm. In a recess 48 composed of multiple grooves, the interval between neighboring recesses 48 will preferably be from 0.2 mm to 1.2 mm at the mouth, and more preferably 0.7 mm.

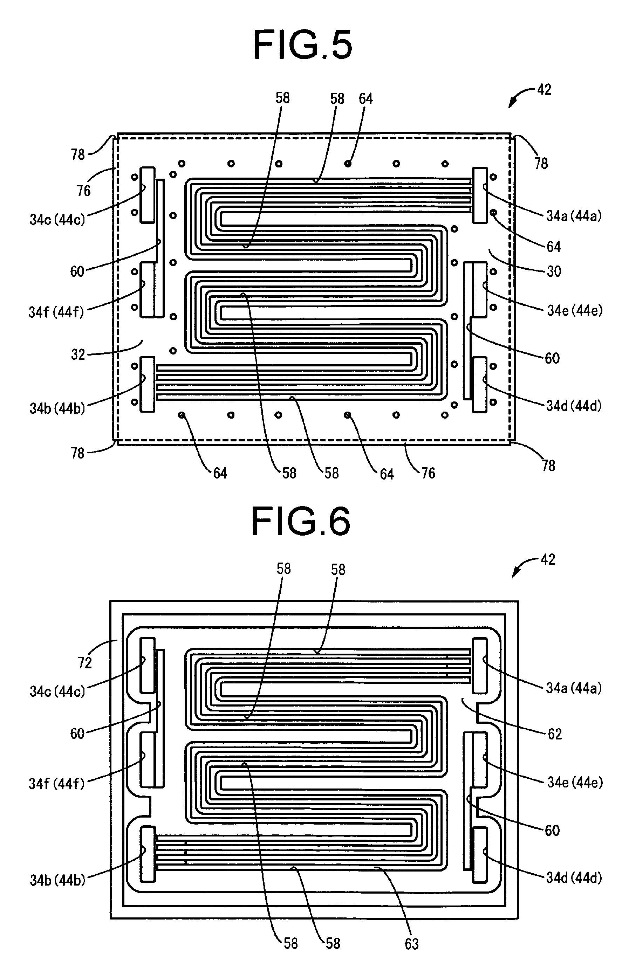

On the primary face of the metal separator 42, the area formed by portions of the recess 48 excepting those portions connecting with the through holes 44a-44d constitutes a gas diffusion zone 50 for stacking against the membrane/electrode assembly 18. As shown in FIG. 5, around the perimeter of the gas diffusion zone 50, the primary face 46 of the metal separator 42 is covered by a primary face seal rubber layer 52 disposed surrounding the gas diffusion zone 50. In this embodiment, the vulcanization molded primary face seal rubber layer 52 is bonded to the primary face 46 of the metal separator 42 over the entire face thereof by means of vulcanization bonding, and adheres fluid-tightly to the metal separator 42. In the assembled state, the primary face seal rubber layers 52 formed covering the primary faces 46 of the first and second separators 20, 22 are placed in pressure contact with one another, thereby providing a fluid-tight seal to the gas diffusion zone 50. Additionally, the inside peripheral face of the primary face seal rubber layer 52 abuts against the outer peripheral face of the fuel electrode 16a or the oxidant electrode 16b, thereby positioning the membrane/electrode assembly 18 superposed to the metal separator 42 on the primary face 46 thereof. In this embodiment in particular, the inside peripheral face of the primary face seal rubber layer 52 is a sloping face, and the inside periphery of the primary face seal rubber layer 52 spreads out gradually moving away from the primary face 46 of the metal separator 42.

Additionally, on the primary face 46 of the metal separator 42, in portions of the recess 48 formed outside of the gas diffusion zone 50, i.e. connecting portions 54 serving as connecting recesses that are the portions connecting with the through holes 44a, 44b, 44c, 44d, the primary face seal rubber layer 52 extends thereover in a bridge configuration so as to cover the openings thereof. In other words, connecting portions 54 which are the connecting portions of the recesses 48 to the through-holes 44a-44d have a generally tunnel structure, by means of the openings of the recesses 48 being covered by the primary face seal rubber layer 52.

On the secondary face of the metal separator 42 on the opposite side thereof from the primary face onto which the recess 48 opens, there is formed as recessed passage 58 serving as a coolant flow passage forming portion, as shown in FIGS. 5 and 6. The recessed passage 58 is formed on the secondary face 56 between the plurality of recesses 48 formed on the primary face 46, and extends from the proximity of the fuel gas inlet 34a to the proximity of the fuel gas outlet 34b. That is, the land portions between the recesses 48 on the primary face 46 are utilized as the recessed passage 58 on the secondary face 56 on the opposite side, and extend along the recesses 48 to just short of the oxidant gas inlet 34c and the oxidant gas outlet 34d.

A connecting recess 60 is formed in proximity to the coolant inlet 34e and the coolant outlet 34f. The connecting recess 60 connects at one end thereof to the coolant inlet 34e or the coolant outlet 34f, while the other end extends in proximity to the oxidant gas inlet 34c or the oxidant gas outlet 34d.

As shown in FIG. 6, on the secondary face 56 is formed a secondary face seal rubber layer 62 that covers substantially the entire face except the outer peripheral portion of the metal separator 42 and the bottom of the recess 48. On the inside face of the recessed passage 58, an insulating rubber layer 63 is integrally formed with the secondary face seal rubber layer 62 and covers the inside of the recessed passage 58. By so doing, the inside of the recessed passage 58 is electrically insulated from the outside along its entire lengthwise extension. In this embodiment in particular, the metal separator 42 is perforated by a plurality of connecting holes 64, and a seal rubber layer 66 is formed by means of physically unifying the primary face seal rubber layer 52 and the secondary face seal rubber layer 62 which adhere respectively to the primary face 46 and the secondary face 56 of the metal separator 42. This arrangement makes it possible to improve adhesive strength of the seal rubber layer 66, and to prevent improper filling of rubber material during molding of the thin seal rubber layer 66.

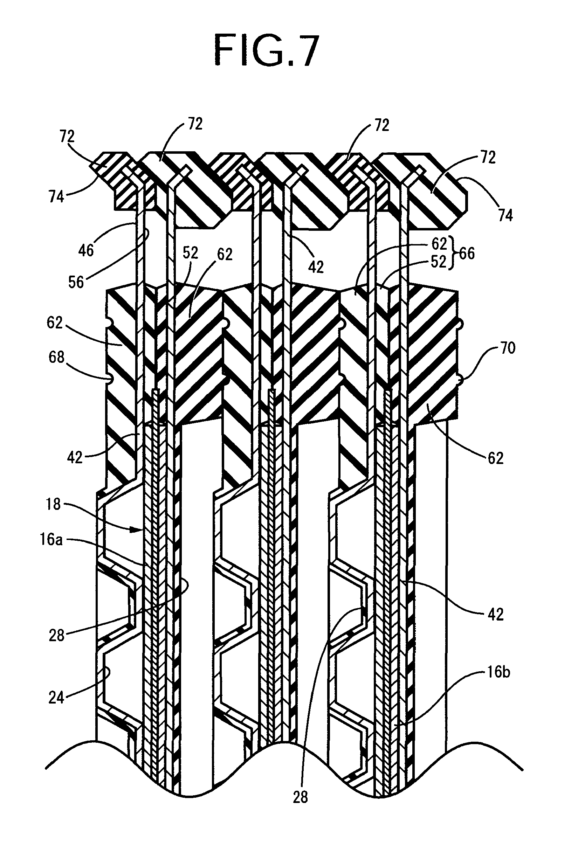

In this embodiment, as shown in FIG. 7, a mating recess 68 is formed in a part of the secondary face seal rubber layer 62 that covers the metal separator 42 for stacking against the fuel electrode 16a, and a mating projection 70 is formed in part of the secondary face seal rubber layer 62 that covers the metal separator 42 for stacking against the oxidant electrode 16b. By means of mating the mating recess 68 and the mating projection 70, when unit cells 12 are stacked up to produce the cell stack, the unit cells 12 are positioned with respect to one another.

Additionally, as shown in FIG. 7, the outside of the seal rubber layer 66, i.e. the outside peripheral edge of the metal separator 42, is covered by an auxiliary seal rubber 72 extending over substantially the entire periphery. By means of the auxiliary seal rubber 72, sealing is provided between the metal separators 42 in the assembled state, preventing fuel gas, oxidant gas, or coolant from leaking to the outside in the unlikely event of a leak through the seal rubber layer 66. The two faces of the auxiliary seal rubber 72 on the primary face 46 side and the secondary face 56 side of the metal separator 42 are sloping faces that slope towards the primary face 46 from the secondary face 56 side, with the sloping face constituting a guide face 74. The slope angle of the guide face 74 is substantially the same on the primary face 46 side and the secondary face 56 side, and when metal separators 42 are superposed, the guide face 74 on the primary face 46 side and the guide face 74 on the secondary face 56 side are stacked on one another whereby the metal separators 42 may be easily positioned together.

In this embodiment in particular, the guide face 74 is a smooth face, which not only ensures a high level of sealing, but makes possible smooth positioning by means of juxtaposing the guide faces 74. As the means for producing smooth faces on the guide faces 74, it would be conceivable by way of specific examples to employ as the material for the auxiliary seal rubber 72 a self-lubricating rubber that incorporates oil or the like so that lubricant bleeds onto the surface, or alternatively to subject the surface to a laser treatment or coating with low-friction resin.

As shown in FIG. 7, the outside peripheral edge portion of the metal separator 42 covered by the auxiliary seal rubber 72 is sloped towards the secondary face 56 on the side opposite the primary face onto which the recesses 48 open, forming a reinforcing rib 76. The reinforcing rib 76 is formed extending substantially all the way around the edge portion at an angle of approximately 25 -65° with respect to the plane of the metal separator 42, making it possible to increase the strength of the metal separator 42 as well to more securely attach the auxiliary seal rubber 72. In this embodiment in particular, notched portions 78 are formed in the four corners of the metal separator 42, which is configured as a generally rectangular plate. By means of the notched portion 78, the reinforcing ribs 76 of adjacent sides are mutually independent, thereby avoiding the occurrence of strain due to bending of the outside edges of the metal separator 42.

Metal separators 42 having the construction described above are superposed against the membrane/electrode assembly 18 from either side. Specifically, the membrane/electrode assembly 18 is constructed by juxtaposing the fuel electrode 16a and the oxidant electrode 16b against the solid polymer electrolyte membrane 14 and unifying them in the manner described previously. The solid polymer electrolyte membrane 14 is of rectangular shape slightly smaller than the metal separator 42, and the fuel electrode 16a and oxidant electrode 16b are of rectangular shape slightly smaller than the solid polymer electrolyte membrane 14. By so doing, the outside peripheral edges of the solid polymer electrolyte membrane 14 project out a predetermined width dimension from the outside peripheral edges of the fuel electrode 16a and oxidant electrode 16b, about the entire periphery. The projecting outside peripheral edges of the solid polymer electrolyte membrane 14 are then sandwiched between the first and second separators 20, 22, and the outside peripheral edges of the solid polymer electrolyte membrane 14 are held clamped about the entire periphery by the primary face seal rubber layers 52 which function as gaskets. By means of the pressure contact against the primary face seal rubber layers 52, a fluidtight seal is provided to the gas diffusion zones on the fuel electrode 16a side and the oxidant electrode 16b side with the membrane/electrode assembly 18 therebetween. In this embodiment in particular, the thickness dimension of the primary face seal rubber layer 52 on the first separator 20 is greater than the thickness dimension of the fuel electrode 16a, and the thickness dimension of the primary face seal rubber layer 52 on the second separator 22 is greater than the thickness dimension of the oxidant electrode 16b. As a specific example, in preferred practice, the thickness dimension of the fuel electrode 16a and the oxidant electrode 16b will be 0.25 mm, and the thickness of each of the primary face seal rubber layers 52 on the separators 20, 22 will be 0.275 mm. Also in preferred practice, the sum of the thickness dimensions of the primary face seal rubber layers 52 on the separators 20, 22 will be the same as or slightly greater than the total thickness of the membrane/electrode assembly 18, i.e. the sum of the thickness dimension of the solid polymer electrolyte membrane 14 and the thickness dimensions of the two fuel/oxidant electrodes 16a, 16b. Preferably, for example, the sum of the thickness dimensions of the primary face seal rubber layers 52 will be 0.55 mm, the thickness dimension of the fuel electrode 16a and the oxidant electrode 16b will be 0.25, and the thickness dimension of the solid polymer electrolyte membrane 14 will be 0.05 mm.

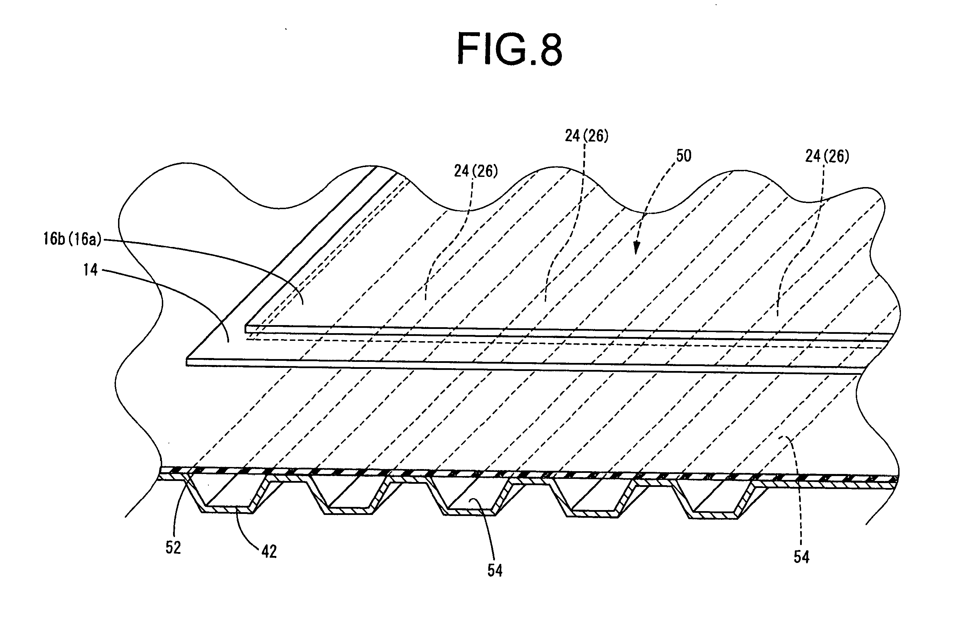

At the openings of the connecting portions 54, the primary face seal rubber layers 52 are not sufficiently clamped between the first and second separators 20, 22 due to the presence of connecting portions 54, and accordingly the solid polymer electrolyte membrane 14, which is intended to be held clamped between the primary face seal rubber layers 52, is not sufficiently clamped either. As a result, there is a risk that the extremely thin solid polymer electrolyte membrane 14 may sag into the connecting portions 54 at the openings of the connecting portions 54. Accordingly there is a danger that a gas leak may occur due to fuel gas/oxidant gas intended to be supplied from the fuel gas inlet 34a/oxidant gas inlet 34c to the fuel gas flow passage 24/oxidant gas flow passage 26 via the connecting portions 54 being drawn through the sag and into the gas diffusion zone or the fuel gas flow passage 24/oxidant gas flow passage 26 on the opposite side of the membrane/electrode assembly 18. Accordingly, in this embodiment in particular, as shown in FIG. 8, the primary face seal rubber layer 52 is disposed bridging over the openings of the connecting portions 54. With this arrangement, sagging of the solid polymer electrolyte membrane 14 can be prevented, and gas leaks of the sort described above can be prevented.

The metal separators 42 are superposed at their primary faces 46, 46 against the membrane/electrode assembly 18. Specifically, the first and second separators 20, 22 used as the two metal separators for stacking against either side of the membrane/electrode assembly 18 are assembled flipped front to back with respect to one another. That is, the first separator 20 is superposed against the fuel electrode 16a with the fuel gas inlet 34a formed at upper left and the fuel gas outlet 34b formed at lower right connected by means of a recess 48. On the other hand, flipping the first separator 20 front to back allows it to be used as the second separator 22 superposed against the oxidant electrode 16b, with the oxidant gas inlet 34c formed at upper right and the oxidant gas outlet 34d formed at lower left connected by means of a recess 48.

In the unit cell 12 produced by juxtaposing the first separator 20 and the second separator 22 against the membrane/electrode assembly 18 from both sides, the opening of the recess 48 which opens onto the primary face 46 of the first separator 20 superposed against the fuel electrode 16a is covered by the fuel electrode 16a, thereby forming a fuel gas flow passage 24 between the fuel electrode 16a and the primary face 46 of the first separator 20. On the other hand, the opening of the recess 48 which opens onto the primary face 46 of the second separator 22 superposed against the oxidant electrode 16b is covered by the oxidant electrode 16b, thereby forming the oxidant gas flow passage 26 between the oxidant electrode 16b and the primary face 46 of the second separator 22. By means of sealing with the solid polymer electrolyte membrane 14 held clamped between the primary face seal rubber layers 52, 52 formed covering the first and second separators 20, 22 in the manner described above, gas leakage past the membrane/electrode assembly 18 between the fuel gas flow passage 24 and the oxidant gas flow passage 26 to either side of the membrane/electrode assembly is prevented.

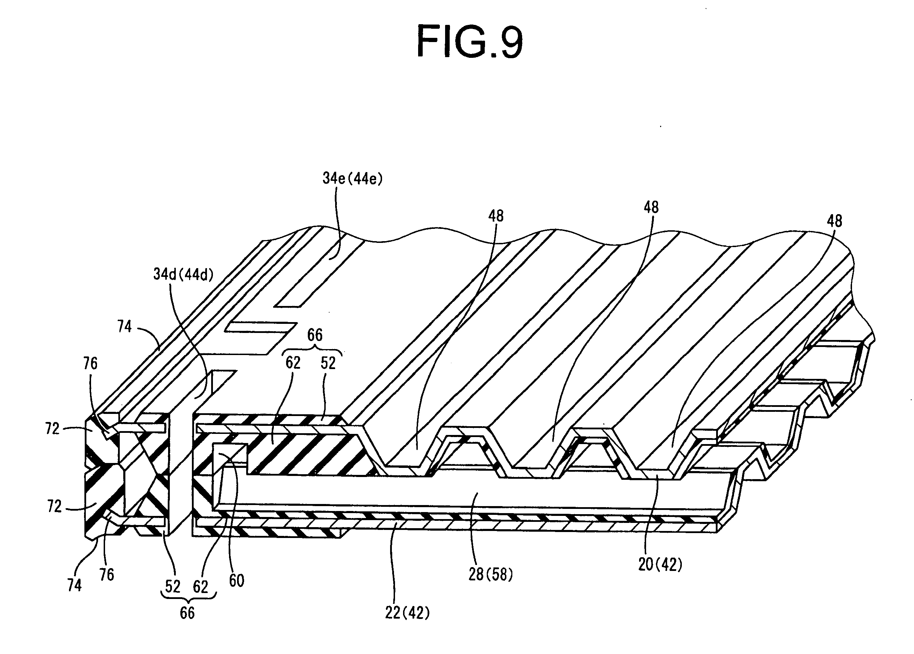

Additionally, by stacking together a number of such unit cells 12 with the secondary faces 56 of the metal separators 42 superposed against one another, the opening of the recessed passage 58 formed in the secondary face 56 of a metal separator 42 is covered by another metal separator 42, forming a coolant flow passage 28 between the secondary faces 56 of the metal separators 42. Specifically, as shown in FIG. 9, in recessed passages 58, 58 formed in the secondary faces 56 of metal separators 42 superposed against one another, in some portions the coolant flow passage 28 is formed by the recessed passages 58, 58 superposed with one another, while in other portions the coolant flow passage 28 is formed by the opening of the recessed passage 58 in one metal separator 42 being covered by the bottom of the recess 48 of the other membrane/electrode assembly 42.

Additionally, part of the connecting recess 60 formed in one of the metal separators 42 is superposed with the end of the recessed passage 58 formed in another metal separator 42, and connects with it in the stacking direction. By means of this, with the secondary faces 56 of the metal separators 42 superposed, the two ends of the coolant flow passage 28 formed in one of the metal separators 42 are placed in communication respectively with the coolant inlet 34e and the coolant outlet 34f via the connecting recess 60 formed in the one metal separator 42, whereby coolant supplied from the coolant inlet 34e flows through the coolant flow passage 28 and is discharged from the coolant outlet 34f.

The coolant flow passage 28 is covered over the entire lengthwise extension of the flow passage inner face by the insulating rubber layer 63, but at the bottom of the recess 48 is not covered by the secondary face seal rubber layer 62, so that there is electrical continuity between the first separator 20 and the second separator 22 in portions where the bottoms of recesses 48 are placed in direct abutment. Thus, there is electrical continuity among unit cells 12 whereby the total voltage produced by the unit cells 12 can be drawn out via the anode collector and the cathode collector, while the coolant flow passage 28 is electrically insulated so that dissipation into the coolant of the power generated by the unit cells 12 is prevented.

With the separator for the solid polymer electrolyte fuel cell of construction according to this embodiment, the first separator 20 and the second separator 22 are constituted as common metal separators 42 which are flipped front to back. Thus, it is possible to reduce the number of parts and to simply the production equipment, and accordingly to facilitate production and management of components.

In this embodiment, metal separators 42 are used as the first and second separators 20, 22. With this arrangement, it is possible to make the first and second separators 20, 22 sufficiently thin, while assuring adequate strength. Thus, it is possible to reduce the thickness of the unit cells 12, and to achieve more compact size of the cell stack composed of the unit cells, and thus of the solid polymer electrolyte fuel cell 10. Additionally, by means of forming the reinforcing rib around the entire outer peripheral edge of the metal separator 42, the strength of the metal separator 42 can be increased further, and a thinner metal separator 42 can be achieved more advantageously.

Further, by forming the first and second separators 20, 22 using metal which has superior conductivity to conductive resins and carbon, a high performance solid polymer electrolyte fuel cell 10 can be realized easily. Also, since metal has a much higher heat resistance temperature than resins or carbon, even if place d in a solid polymer electrolyte fuel cell 10 that produces an exothermic reaction, it is possible to avoid problems such as heat induced deformation and shrinkage. Additionally, metal separators 42 are easily reused by being recycled.

Yet further, by forming the first and second separators 20, 22 using the metal separators 42 formed by press-molding, these separators 20, 22 can be formed with high dimensional accuracy and high production efficiency.

Since the recess 48 has a shape extending in sinuous configuration, the fuel gas flow passage 24 and the oxidant gas flow passage 26 formed by the recess 48 can be formed over substantially the entire gas diffusion zone 50. Thus, fuel gas or oxidant gas can efficiently be made to contact the fuel electrode 16a or the oxidant electrode 16b.

Additionally, the peaks and valleys produced on the secondary face 56 of the metal separator by means of forming the recess 48 can be utilized to form the recessed passage 58. By so doing, the coolant flow passage 28 constituted by the recessed passage 58, like the fuel gas flow passage 24 and the oxidant gas flow passage 26, can be formed over a wide area on the metal separator 42, so that efficient cooling can be achieved.

In this embodiment, the primary face seal rubber layer 52 is disposed surrounding the gas diffusion zone 50 on the primary face 46 size, while on the secondary face 56 is formed a secondary face seal rubber layer 62 that covers substantially the entire face except the outer peripheral portion of the metal separator 42 and the bottom of the recess 48. This arrangement makes it possible to prevent leakage of fuel gas or oxidant gas.

The primary face seal rubber layer 52 formed on the primary face 46 and the secondary seal rubber layer 62 formed on the secondary face 56 are unified by being physically connected by means of the connecting holes 64. By means of the adhesive strength of the seal rubber layer 66 to the metal separator 42 can be increased, and the rubber material can be spread nicely over the separator surface during molding of the seal rubber layer 66, preventing the occurrence of defective products.

Additionally, the primary face seal rubber layer 52 is formed extending in a bridge configuration so as to cover the openings of the connecting portions 54 connecting the recesses 48 with the through-holes 44a-44d. Thus, it is possible to avoid sagging of the solid polymer electrolyte membrane 14 at the openings of the connecting portions 54, resulting in fuel gas leaking to the oxidant electrode 16b side or oxidant gas leaking to the fuel electrode 16a side. Since the primary face seal rubber layer 52 formed so as to cover the openings of the connecting portions 54 is affixed to the metal separator 42 at both lateral edges of the recess 48, compressive force during sealing is advantageously assured not only by simple elasticity in the shear direction, but also by elasticity in the tensile direction.

In the solid polymer electrolyte fuel cell 10, the use of the metal separator of construction according to this embodiment makes it possible to reduce the number of parts or components, thereby reducing the overall size of the fuel cell 10 while maintaining strength and electric performance.

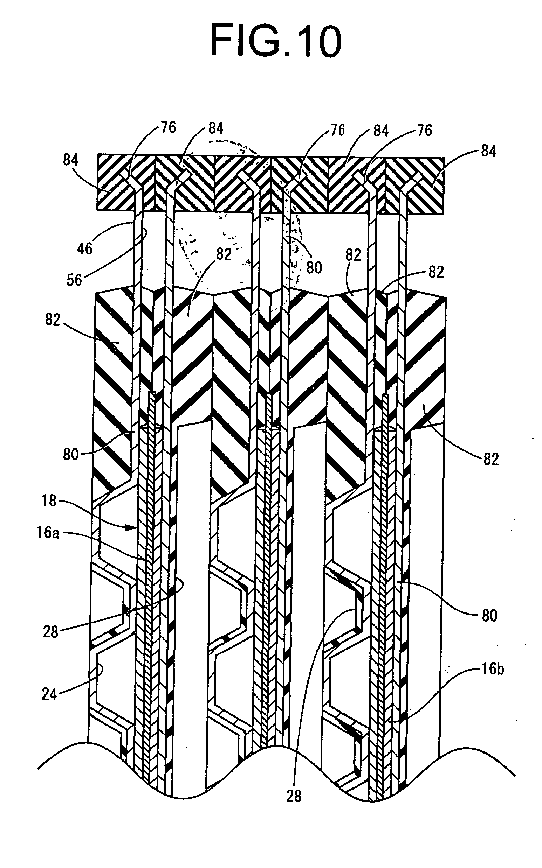

Referring next to FIG. 10, the unit cell 80 of a solid polymer electrolyte fuel cell as a second embodiment of the invention is shown in the assembled state. In the following description, components are parts substantially identical to those of the first embodiment are assigned the same symbols as the first embodiment in the drawing, and are not described in any detail.

Specifically, in the second embodiment of the invention, the seal rubber layer 82 and auxiliary seal rubber 82 formed on the plurality of metal separators 42 making up the unit cell 80 have substantially identical shape. Specifically, for example, the mating recess 68 and the mating projection 70 provided to the seal rubber layer 82 in the first embodiment are not provided to the seal rubber layer 82 in the second embodiment, and the auxiliary seal rubber 84 has a generally square shape without sloping faces.

In the cell for the solid polymer electrolyte fuel cell of construction according to the second embodiment, since the shape is identical when flipped front to back, it is possible for the procedure of stacking unit cells 80 to make a solid polymer electrolyte fuel cell to be carried out more efficiently.

Even where the metal separator is covered with a seal rubber layer 82 and an auxiliary seal rubber 84, by flipping it front to back, it is possible to use either the first separator 20 or the second separator 22. Thus, it is possible to more advantageously achieve standardization of parts for the first separator 20 and the second separator 22, so that more efficient operations during assembly may be achieved.

While the presently preferred embodiments of this invention have been described in detail, for illustrative purpose only, it is to be understood that the present invention is not limited to the details of the illustrated embodiments.

For instance, the recesses 48 formed in the metal separators 42, 80 will in preferred practice extend in a sinuous configuration as in the preceding examples, but need not necessary have such a configuration.

The cross sectional shape of the recess 48 is not limited in any way to the shape taught in the embodiments. As a specific example, a recess with a rectangular cross section could be employed.

In the preceding embodiments, the coolant flow passage 28 is formed using the peaks and valleys formed by the recesses 48 on the secondary faces 56 of the first and second separators 20, 22, but it is not necessary to use these peaks and valleys to form the coolant flow passage 28. Additionally, it is not necessary for flow passages to extend with substantially unchanging cross section, it being sufficient for the passage to connect the coolant inlet 34e and the coolant outlet 34f on the secondary face so that coolant can flow between them.

The fuel gas inlet 34a oxidant gas inlet 34c connected by the recesses 48, or the coolant inlet 34e and the coolant outlet 34f connected by the coolant flow passage 28, need not be limited to one of each. Specifically, it would be possible to form a plurality of inlets and outlets, in which case a plurality of flow passages would be formed to connect the openings.

While in the preceding embodiments the outer peripheral portion of the membrane/electrode assembly 18 is located inward of the inlet holes 34a, 34c and the outlet holes 34b, 34d, the membrane/electrode assembly 18 may extends outward beyond the location where these inlet holes 34a, 34c and the outlet holes 34b, 34d are opened. In this arrangement, the outer peripheral portion of the membrane/electrode assembly 18 is located on the way of the connecting portions 54, resulting in no gas leakage past the membrane/electrode assembly 18 to the opposite side as stated above. In this arrangement, however, the membrane/electrode assembly 18 is formed with the inlet holes 34a, 34c, 34e and the outlet holes 34b, 34d, 34f for supplying and discharging gas and coolant water, like in the first and second separators 20, 22. More specifically, the outer peripheral portion of the membrane/electrode assembly 18 is located at positions where the inlet and outlet holes 34a -34f are formed, leading to a difficulty in obtaining a sufficient clamping force at the location where is formed the connecting portions 54 open to the inlet and outlet holes 34a -34f, as stated above. There is a risk of gas leaks to the opposite side of the membrane/electrode assembly 18 through the inlet and outlet holes 34a -34d. With this regards, the primary face seal rubber layer 52 is disposed bridging over the openings of the connecting portions 54, in the illustrated embodiments. Therefore, the presence of the primary face seal rubber layer 52 efficiently ensures a clamped sealing performance of the membrane/electrode assembly 18.

In the preceding embodiments, notched portions 78 were provided in the corners of the metal separators 42, 80, but it is not necessary to provide such notched portions. Additionally, it is not necessary to provide the reinforcing ribs 76 disposed on the outer peripheral edges of the metal separators 42, 80. Nor is it necessary to provide the auxiliary rubber 72, 84 covering the reinforcing rib 76. By dispensing with formation of the auxiliary rubber 72, 84, and also dispensing with formation of the mating recess 68 and the mating projection 70 in the secondary face seal rubber layer 62, it is possible to realize the first and second separators 20, 22 as separators of substantially identical shape, whereby handling and assembly procedures may be carried out more efficiently.

In this embodiment, the secondary face seal rubber layer 62 is not formed on the bottom of the recess 48. However, it would be possible for the bottom of the recess 48 to also be covered by the secondary face seal rubber layer 62, except in portions where the bottoms of recesses 48 are in direct abutment. By so doing, the coolant passage 28 can be provided with a higher level of insulation, diffusion of power into the coolant can be effectively prevented, and the efficiency of the solid polymer electrolyte fuel cell can be improved.

## Claims

1. A single type metal separator (42) for use in a solid polymer electrolyte fuel cell (10) having a membrane/electrode assembly (18) including a fuel electrode (16a) and an oxidant electrode (16b) disposed on either side of a solid polymer electrolyte membrane (14), a first separator (20) superposed against a surface of the fuel electrode (16a) forming a fuel gas flow passage (24) and a second separator (22) superposed against a surface of the oxidant electrode (16b) forming an oxidant gas flow passage(26);
wherein the metal separator (42) comprises a rectangular thin metal plate having punched and drawn upper through-holes (34a, 34c) and lower through-holes (34b, 34d) of a pair of opposite sides situated at opposing locations in a first direction, as well as a plurality of recesses (48) extending substantially parallel at a primary face thereof so as to connect the upper through hole (34a) of a first opposing side with the lower through-hole (34b) of an other opposing side;
**characterized in that** the single type metal separator (42) is configured such that, when flipped front to back, it can be used as either the first separator (20) and the second separator (22) in said polymer electrolyte fuel cell (10);
wherein in the metal separator (42), center through-holes are disposed at center locations on opposing sides situated at mutually opposite locations in any direction, whereby, when used as the first separator (20) and the second separator (22), a coolant inlet hole (34e) and a coolant outlet hole (34f) are formed by these center through-holes, and the each metal separator serving as the first separator (20) or the second separator (22) is adapted to be superposed directly against an adjacent metal separator of a neighboring unit cell, at secondary faces (56) thereof so that bottoms of the recesses of each metal separator are disposed in electrical continuity and in abutment with one another, whereby a coolant flow passage (28) is formed traversing between the center holes disposed in the center locations of the opposing sides;
the metal separator (42) has an entire peripheral edge bent; and when used as the first separator (20) and the second separator (22), a secondary face seal rubber layer (62) is formed adhering to the secondary face (56) of the metal separator (42), the secondary face seal rubber layer (62) being utilized to partially form the coolant flow passage (28) formed between the secondary faces of the superposed metal separators.

2. The separator (42) for use in a solid polymer electrolyte fuel cell (10) according to claim 1, wherein, when used as the first separator (20) and the second separator (22), between the secondary faces (56) of the metal separators (42) superposed against one another at their secondary faces, there is formed the coolant flow passage (28) utilizing an area of passage form that appears between the plurality of recesses (48) extending substantially parallel next to one another.

3. The separator (42) for use in a solid polymer electrolyte fuel cell (10) according to any one of claims 1 or 2, wherein, when used as the first separator (20) and the second separator (22), a primary face seal rubber layer (52) is formed adhering to the primary face (46) onto which the recesses (48) open in the metal separator, with a perimeter of the recess formation zone being surrounded by the primary face seal rubber layer (52), and wherein in connecting regions of the ends of the recesses (48) with the upper and lower through-holes (34a, 34b), the primary face seal rubber layer is formed so as to extend continuously in a recess width direction, traversing an open portion of the connecting regions of the recesses.

4. A unit cell (12) for a solid polymer electrolyte fuel cell (10), comprising a pair of metal separators (42) according to any one of claims 1-3 and a membrane/electrode assembly (18) composed of a fuel electrode (16a) and an oxidant electrode (16b) disposed on either side of the solid polymer electrolyte membrane has juxtaposed thereagainst one of the metal separators disposed with the primary face (46) thereof on which the recesses (48) are formed juxtaposed against the oxidant electrode (16b) to form an oxidant gas flow passage (26), and with the other the metal separator juxtaposed against the fuel electrode (16a) to form a fuel gas flow passage (24).

## Patentansprüche

1. Metallabscheider (42) des Einzeltyps für die Verwendung in einer Feststoffpolymerelektrolyt-Brennstoffzelle (10), die eine Membran/ElektrodenAnordnung (18) mit einer Brennstoffelektrode (16a) und einer Oxidanselektrode (16b), die auf den beiden Seiten einer Feststoffpolymerelektrolyt-Membran (14) angeordnet sind, einen ersten Abscheider (20), der an einer Oberfläche der Brennstoffelektrode (16a) angelagert ist und einen Brennstoffgas-Durchflusskanal (24) bildet, und einen zweiten Abscheider (22), der an einer Oberfläche der Oxidanselektrode (16b) angelagert ist und einen Oxidansgasdurchflusskanal (26) bildet, besitzt;
wobei der Metallabscheider (42) eine rechtwinklige dünne Metallplatte aufweist, in die obere Durchgangslöcher (34a, 34c) und untere Durchgangslöcher (34b, 34d) eines Paars gegenüberliegender Seiten, die sich an gegenüberliegenden Orten in einer ersten Richtung befinden, sowie mehrere Aussparungen (48), die sich im Wesentlichen parallel zu einer primären Fläche erstrecken, um das obere Loch (34a) einer ersten gegenüberliegenden Seite mit dem unteren Durchgangsloch (34b) der anderen gegenüberliegenden Seite zu verbinden, gestanzt bzw. gezogen sind;
**dadurch gekennzeichnet, dass** der Einzeltyp-Metallabscheider (42) in der Weise konfiguriert ist, dass er dann, wenn er von vorn nach hinten geklappt wird, entweder als der erste Abscheider (20) oder als der zweite Abscheider (22) in der Polymerclektrolyt-Brennstoffzelle (10) verwendet werden kann;
wobei in dem Metallabscheider (42) Mitteldurchgangslöcher an Mittelorten auf gegenüberliegenden Seiten angeordnet sind, die sich an Orten, die in irgendeiner Richtung einander gegenüber liegen, befinden, wobei dann, wenn er als der erste Abscheider (20) und als der zweite Abscheider (22) verwendet wird, durch diese Mitteldurchgangslöcher ein Kühlmitteleinlassloch (34e) und ein Kühlmittelauslassloch (34f) gebildet sind und jeder Metallabscheider, der als der erste Abscheider (20) oder als der zweite Abscheider (22) dient, dafür ausgelegt ist, direkt an einem benachbarten Metallabscheider einer Zelle einer benachbarten Einheit an sekundären Flächen (56) hiervon angelagert zu werden, so dass Böden der Aussparungen jedes Metallabscheiders elektrisch ununterbrochen und in gegenseitigem Anschlag angeordnet sind, wobei ein Kühlmitteldurchflusskanal (28) gebildet wird, der zwischen den an den Mittelorten der gegenüberliegenden Seiten angeordneten Mittellöchern verläuft;
der Metallabscheider (42) eine vollständige Umfangskantenbiegung besitzt;
und
dann, wenn er als der erste Abscheider (20) und der zweite Abscheider (22) verwendet wird, eine Dichtungsgummischicht (62) der sekundären Fläche so geformt ist, dass sie an der sekundären Fläche (56) des Metallabscheiders (42) haften, wobei die Dichtungsgummischicht (62) der sekundären Fläche verwendet wird, um den Kühlmitteldurchflusskanal (28), der zwischen den sekundären Flächen der aneinander liegenden Metallabscheider gebildet ist, teilweise zu formen.

2. Abscheider (42) für die Verwendung in einer Feststoffpolymerelektrolyt-Brennstoffzelle (10) nach Anspruch 1, wobei dann, wenn er als der erste Abscheider (20) und als der zweite Abscheider (22) verwendet wird, zwischen den sekundären Flächen (56) der Metallabscheider (42), die an ihren sekundären Flächen aneinander anliegen, der Kühlmitteldurchflusskanal (28) unter Verwendung einer Kanalquerschnittsflächenform geformt wird, die zwischen den mehreren Aussparungen (48), die sich im Wesentlichen parallel zueinander erstrecken, erscheint.

3. Abscheider (42) für die Verwendung in einer Feststoffpolymerelektrolyt-Brennstoffzelle (10) nach einem der Ansprüche 1 oder 2, wobei dann, wenn er als der erste Abscheider (20) und als der zweite Abscheider (22) verwendet wird, eine Dichtungsgummischicht (52) der primären Fläche gebildet ist, die an der primären Fläche (46) haftet, in der die Aussparungen (48) in den Metallabscheider münden, wobei ein Umfang der Aussparungsbildungszone von der Dichtungsgummischicht (52) der primären Fläche umgeben ist, und wobei in Verbindungsbereichen der Enden der Aussparungen (48) mit den oberen und unteren Durchgangslöchern (34a, 34b) die Dichtungsgummischicht der primären Fläche so geformt ist, dass sie sich in einer Aussparungsbreitenrichtung ununterbrochen erstreckt und einen offenen Abschnitt der Verbindungsbereiche der Aussparungen durchquert.

4. Einheitszelle (12) für eine Feststoffpolymerelektrolyt-Brennstoffzelle (10), die ein Paar Metallabscheider (42) nach einem der Ansprüche 1-3 umfasst, wobei an einer Membran/Elektroden-Anordnung (18), die aus einer Brennstoffelektrode (16a) und einer Oxidanselektrode (16b) gebildet ist, die beiderseits der Feststoffpolymerelektrolyt-Membran angeordnet sind, direkt einer der Metallabscheider mit seiner primären Fläche (46) angeordnet ist, auf der die Aussparungen (48) angrenzend an die Oxidanselektrode (16b) gebildet sind, um einen Oxidansgasdurchflusskanal (26) zu bilden, wobei der andere Metallabscheider an der Brennstoffelektrode (16a) anliegt, um einen Brennstoffgasdurchflusskanal (24) zu bilden.

## Revendications

1. Séparateur métallique (42) d'un seul type destiné à servir dans une pile (10) à combustible à électrolyte polymère solide ayant un ensemble membrane/électrodes (18) comportant une électrode (16a) pour combustible et une électrode (16b) pour oxydant disposées de part et d'autre d'une membrane électrolytique (14) en polymère solide, un premier séparateur (20) superposé contre une surface de l'électrode (16a) pour combustible en formant un passage d'écoulement (24) de gaz combustible et un second séparateur (22) superposé contre une surface de l'électrode (16b) pour oxydant en formant un passage d'écoulement (26) de gaz oxydant ;
le séparateur métallique (42) comprenant une mince plaque métallique rectangulaire ayant des trous traversants supérieurs (34a, 34c) et des trous traversants inférieurs (34b, 34d), formés par poinçonnage et extraction, d'une paire de côtés opposés situés à des emplacements opposés dans une première direction, ainsi qu'une pluralité d'évidements (48) s'étendant sensiblement parallèlement, sur une face primaire de celle-ci, de manière à relier le trou traversant supérieur (34a) d'un premier côté opposé au trou traversant inférieur (34b) d'un autre côté opposé,
**caractérisé en ce que** le séparateur métallique (42) d'un seul type est conçu de façon que, lorsqu'il est basculé d'avant en arrière, il puisse servir soit de premier séparateur (20) soit de second séparateur (22) dans ladite pile (10) à combustible à électrolyte polymère solide,
dans le séparateur métallique (42), des trous traversants centraux étant ménagés à des emplacements centraux sur des côtés opposés situés à des emplacements mutuellement opposés dans n'importe quelle direction, grâce à quoi, en cas d'utilisation comme premier séparateur (20) et second séparateur (22), un trou d'entrée (34e) d'agent de refroidissement et un trou de sortie (34f) d'agent de refroidissement sont formés par ces trous traversants centraux, et chaque séparateur métallique servant de premier séparateur (20) ou de second séparateur (22) étant apte à être superposé directement contre un séparateur métallique adjacent d'un élément individuel voisin, sur des faces secondaires (56) de celle-ci de façon que les fonds des évidements de chaque séparateur métallique soient disposés en continuité électrique les uns avec les autres et en butée les uns contre les autres, grâce à quoi est formé un passage d'écoulement (28) d'agent de refroidissement traversant entre les trous centraux ménagés au centre des côtés opposés ;
le séparateur métallique (42) a un bord périphérique entier recourbé ; et
en cas d'utilisation comme premier séparateur (20) et second séparateur (22), sur la face secondaire est formée une couche d'étanchéité en caoutchouc (62) adhérant à la face secondaire (56) du séparateur métallique (42), la couche d'étanchéité en caoutchouc (62) sur la face secondaire servant à former partiellement le passage d'écoulement (28) d'agent de refroidissement formé entre les faces secondaires des séparateurs métalliques superposés.

2. Séparateur (42) destiné à servir dans une pile (10) à combustible à électrolyte polymère solide selon la revendication 1, dans lequel, lors d'une utilisation comme premier séparateur (20) et second séparateur (22) entre les faces secondaires (56) des séparateurs métalliques (42) superposés les uns contre les autres sur leurs faces secondaires, le passage d'écoulement (28) d'agent de refroidissement est formé en utilisant une zone en forme de passage qui apparaît entre la pluralité d'évidements (48) s'étendant sensiblement parallèlement les uns près des autres.

3. Séparateur (42) destiné à servir dans une pile (10) à combustible à électrolyte polymère solide selon l'une quelconque des revendications 1 ou 2, dans lequel, lors d'une utilisation comme premier séparateur (20) et second séparateur (22), une couche d'étanchéité en caoutchouc (52) est formée sur la face primaire, adhérant à la face primaire (46) sur laquelle les évidements (48) débouchent dans le séparateur métallique, un pourtour de la zone de formation d'évidements étant entourée par la couche d'étanchéité en caoutchouc (52) sur la face primaire, et dans lequel, dans des zones de liaison des extrémités des évidements (48) aux trous traversants supérieurs et inférieurs (34a, 34b), la couche d'étanchéité en caoutchouc sur la face primaire est formée de manière à s'étendre en continu dans un sens de la largeur des évidements, passant sur une partie ouverte des zones de liaison des évidements.

4. Elément individuel (12) pour pile (10) à combustible à électrolyte polymère solide, comportant une paire de séparateurs métalliques (42) selon l'une quelconque des revendications 1 à 3 et un ensemble membrane/électrodes (18) composé d'une électrode (16a) pour combustible et d'une électrode (16b) pour oxydant disposées de part et d'autre de la membrane en électrolyte polymère solide contre laquelle est juxtaposé l'un des séparateurs métalliques, la face primaire (46) de celui-ci sur laquelle sont formés les évidements (48) étant juxtaposée contre l'électrode (16b) pour oxydant afin de former un passage d'écoulement (26) de gaz oxydant, et l'autre séparateur métallique étant juxtaposé contre l'électrode (16a) pour combustible afin de former un passage d'écoulement (24) de gaz combustible.
